# EUROPEAN PATENT SPECIFICATION

(11) **EP 1 187 408 B1**
(45) Date of publication and mention of the grant of the patent: **17.08.2005**
(21) Application number: 01307576.7
(22) Date of filing: 06.09.2001
(51) Int. Cl.: H04L 12/64, H04M 11/06, H04M 7/00, H04Q 11/04

(54) **Network extender module**
Netzwerkerweiterungsmodul
Module pour l'extension de un réseau

(30) Priority: 06.09.2000 GB 0021873
(43) Date of publication of application: 13.03.2002
(73) Proprietor: Texas Instruments Limited, Northampton Business Park, Northampton NN4 7YL (GB); Texas Instruments Incorporated, Dallas, Texas 75251 (US)
(72) Inventor: Szczepanek, Andre, Hartwell, Northamptonshire (GB)
(74) Representative: Legg, Cyrus James Grahame

(56) References cited:
- WO-A-00/33522
- WO-A-98/11758

## Description

The present invention relates to communications over a data network and more especially to voice telephony over a conventional Ethernet network.

Voice Over Internet Protocol (VOIP) is a protocol that facilitates the use of a data network for voice telephony. A VOIP telephone system can be incorporated into a computer workstation but most users prefer a separate handset that is more in keeping with a conventional telephone system. In order to use a separate handset, the VOIP telephone and the computer workstation can share a network connection, or else they will require separate network connections. Many computer workstations are equipped with only one network connection and so it is advantageous to provide a system in which the computer workstation and the VOIP telephone can share the same network connection. Circuit modules that enable more than one system to connect to a network using the same network connection are known as network extender modules.

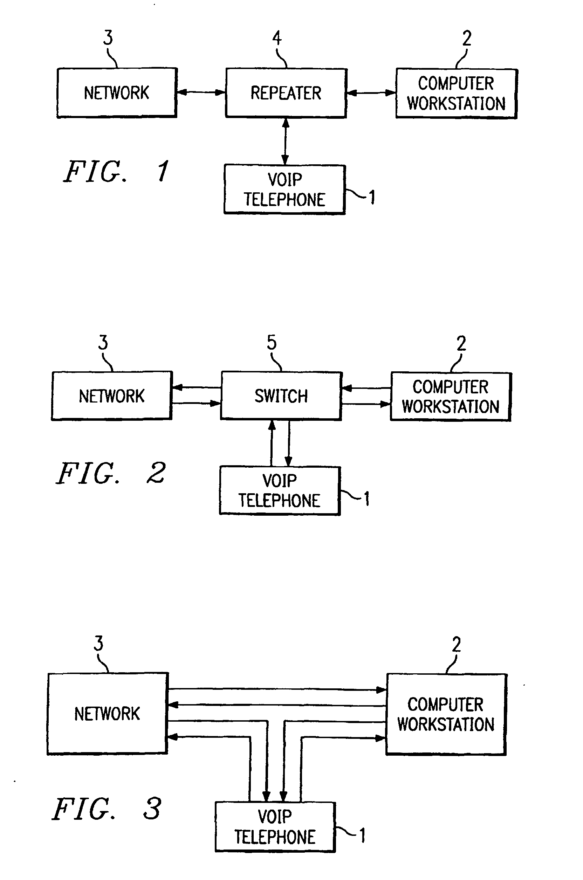

A known half-duplex VOIP system uses the configuration shown in Figure 1. A VOIP telephone 1, computer workstation 2 and network 3 are each connected to a repeater 4. When one of the VOIP telephone 1, computer workstation 2 or network 3 wishes to transmit data, that device must acquire control of the repeater 4. Data can then be transferred from that device to the repeater 4. The repeater 4 then repeats that incoming data to the other two ports. In this way, the repeater 4 allows data to be transferred from the computer workstation 2 to the network 3, from the network to the computer workstation, from the VOIP telephone 1 to the network and from the network to the VOIP telephone. Further, the repeater 4 allows control data to pass between the computer workstation 2 and the VOIP telephone 1.

A major disadvantage with the configuration of Figure 1 is that the connection is half-duplex (i.e. in only one direction at a time). Full-duplex connections on the other hand have twice the bandwidth of half-duplex connections. Further, for two-way traffic, there is no need for the two ports to compete for control of the network when a full-duplex connection is used; both ports can transmit at the same time.

WO98/11758 discloses an ISDN network termination unit having a first interface for connecting to the ISDN network, a second interface for connection to ISDN devices (e.g. telephone sets, fax machines), and a third interface for connecting to non-ISDN devices.

It is an object of the present invention to provide an improved means of adding, for example, a VOIP telephone connection to a conventional computer workstation to data network connection using a single network connection.

The invention provides a module for connecting first and second data sources to a network using a single network connection, comprising:
first and second interface means respectively for passing data to and from the network and to and from the first data source, the module being arranged to transmit data from the first interface means to the second interface means and from the second interface means to the first interface means so as to allow communication between the first data source and the network when they are connected to the module; and
third and fourth interface means both for passing data to and from the second data source,
characterised in that the module is arranged to transmit data from the third interface means to the first interface means and from the first interface means to the third interface means so as to allow communication between the second data source and the network when they are connected to the module but not to transmit data between the third interface means and the second interface means, and is arranged to transmit data from the fourth interface means to the second interface means and from the second interface means to the fourth interface means so as to allow communication between the second data source and first data source when they are connected to the module but not to transmit data between the fourth interface means and the first interface means.

The third interface means may be arranged to pass data between the second data source, when that is connected, and the first interface means only, and the fourth interface means may be arranged to pass data between the second data source, when that is connected, and the second interface means only. The first and second interface means are preferably media access controllers. The third and fourth interface means are preferably arranged to transfer data to and from a VOIP telephone.

The module preferably comprises buffering means for regulating the flow of data between the interface means. The buffering means may comprise a plurality of FIFO buffers. In particular the module may comprise a first FIFO regulating the flow of data from the first interface means to the second interface means, a second FIFO regulating the flow of data from the second interface means to the first interface means, a third FIFO regulating the flow of data from the first interface means to the third interface means, a fourth FIFO regulating the flow of data from the third interface means to the first interface means, a fifth FIFO regulating the flow of data from the second interface means to the fourth interface means and a sixth FIFO regulating the flow of data from the fourth interface means to the second interface means.

The module may comprise at least one further FIFO connected in parallel with one of the said first to sixth FIFOs. The parallel FIFOs may then carry data of different importance, the relevant interface means dealing with data from the parallel FIFOs in order of the relative importance of the data carried by the FIFOs. The or a said further FIFO may be connected in parallel with the said fourth FIFO, the module being arranged to place voice data from the third interface means in one of those two FIFOs and other data from the third interface means in the other and to give priority in the transmission of data from those two FIFOs to the voice data.

The FIFO buffers may be implemented in a memory device with each FIFO being represented by a group of memory locations. That memory device is preferably a RAM. Further, the module may comprise means for dynamically allocating memory locations to the FIFO buffers.

The module may include means for prioritising the transmission of data via the first interface means that arrive into the module via the second interface means and the third interface means. The module may be arranged so that data arriving via the third interface means takes priority over data arriving via the second interface means.

The module may include means for prioritising the transmission of data via the second interface means that arrive via the first interface means and the fourth interface means. The module may be arranged so that data arriving via the fourth interface means takes priority over data arriving via the first interface means.

An embodiment of the network extender module will now be described by way of example only with reference to the accompanying drawings, of which:
- FIGURE 1: is a block diagram of a known half-duplex VOIP telephone system;
- FIGURE 2: is a block diagram of a full-duplex VOIP telephone system using a three-port switch;
- FIGURE 3: is a graphical representation of the data flow in the telephone system of Figure 2;
- FIGURE 4: is a block diagram of a full-duplex VOIP telephone system including a network extender module in accordance with the present invention;
- FIGURE 5: is a block diagram of the VOIP telephone system of Figure 4 implemented using RAM.

Figure 2 shows a configuration that provides full-duplex connections. In Figure 2, the repeater 4 of Figure 1 is replaced by a three-port switch 5. Each port of the switch provides two connections - a line in and a line out - in order to provide a full duplex connection. A switch allows data received at a port to be routed in general to any other one of its ports; the internal structure of the switch needed for that routing is complex and will be described below.

Two known methods of handling the transfer of broadcast packets of data in the switch 5 are (1) making a copy of each incoming broadcast packet for each destination port and (2) using data structures to manage packet data such that a single copy of each broadcast packet can be referred to by each destination port. The first method requires relatively high bandwidth since multiple copies of the same data will be created. The second method requires memory management to ensure that the single copy of the data only exists until all destination ports have sent that data. One possible implementation is to use linked lists. The linked lists form queues of packets, for example broadcast packets, for each port of the switch, with packets able to exist on more than one queue. Each packet can only be deleted once it has been un-linked for all of its destination queues. This last option is more complicated.

The data traffic in a VOIP switch module, such as that of Figure 2, consists of three channels.
1. Computer data traffic between the network 3 and the computer workstation 2;
2. VOIP traffic between the VOIP telephone 1 and the network 3;
3. Occasional control traffic between the VOIP telephone 1 and the computer workstation 2.

The three data traffic channels are shown diagrammatically in Figure 3.

The traffic between the network 3 and the computer workstation 2 comprises the bulk of the traffic that passes through the switch 5 with the control traffic between the VOIP telephone 1 and the computer workstation 2 being relatively infrequent. The present invention makes use of the restricted data flow, in particular by simplifying the overall buffering requirements.

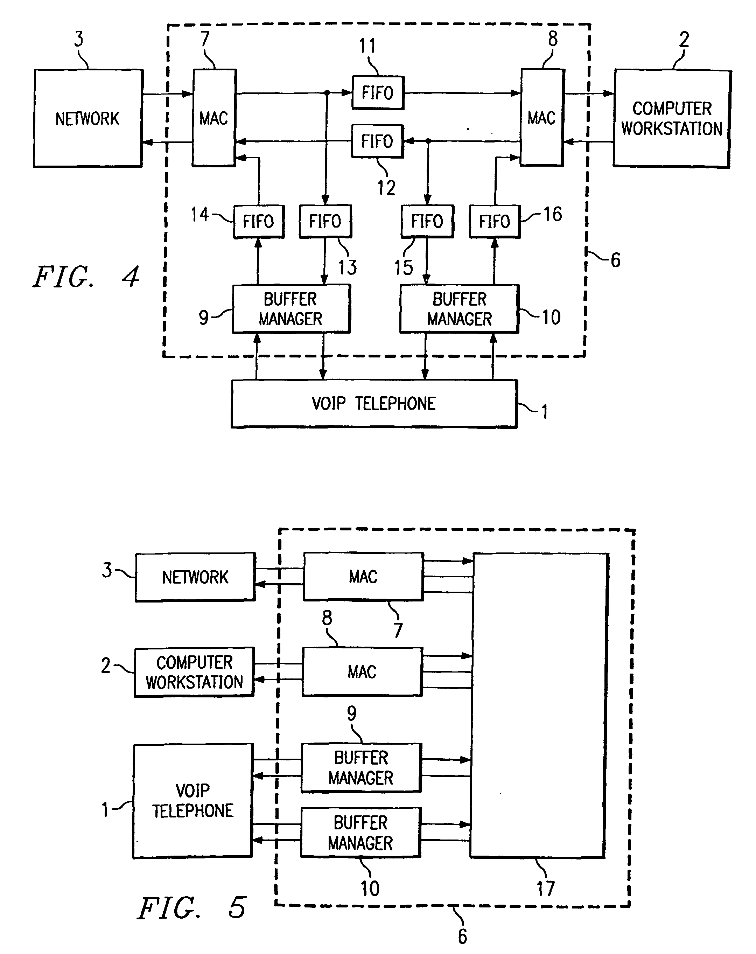

An embodiment of a network extender module according to the present invention is shown in Figure 4. In use, the network extender module 6 of Figure 4 replaces the switch 5 of Figure 2. The network extender module 6 comprises two media access controllers (MACs) 7 and 8, two buffer managers 9 and 10 and six first-in-first-out (FIFO) buffers 11 to 16.

MAC 7 controls the flow of data to and from the network 3, MAC 8 controls the flow of data to and from the computer workstation 2. Buffer managers 9 and 10 control data flow to and from the VOIP telephone 1 but buffer manager 9 handles the traffic between the network 3 and the VOIP telephone 1 and buffer manager 10 handles the traffic between the computer workstation 2 and the VOIP telephone. FIFOs 11 to 16 are connected between MACs 7 and 8 and buffer managers 9 and 10 in order to regulate the flow of data between them. FIFO 11 regulates the flow of data from MAC 7 to MAC 8, FIFO 12 regulates the flow of data from MAC 8 to MAC 7, FIFOs 13 and 14 regulate the flow of data from MAC 7 to buffer manager 9 and from buffer manager 9 to MAC 7 respectively and FIFOs 15 and 16 regulate the flow of data from MAC 8 to buffer manager 10 and from buffer manager 10 to MAC 8 respectively.

Each of MACs 7 and 8 perform the data serialisation and de-serialisation and handle the network access protocols that are required for transferring data to and from the network 3 and to and from the computer workstation 2, using preferably standard network protocols. Buffer managers 9 and 10 transfer packets of data to and from the VOIP telephone 1 and MACs 7 and 8. Data transferred between the VOIP telephone 1 and the network extender module 6 is generally via a physically short connection and is of low bandwidth. Therefore, it is not necessary there to use data transmission techniques. The buffer managers 9 and 10 are not required to handle network access protocols or to perform data serialisation and de-serialisation; the data can be passed to and from the VOIP telephone in parallel and since the VOIP telephone may be designed specially to work with the network extender module and indeed may be part of the same unit a non-standard transmission protocol may be used. The buffer managers 9 and 10 are therefore in the preferred embodiment much simpler devices than MACs 7 and 8.

MAC 7 takes data from FIFOs 12 and 14 (one at a time) and MAC 8 takes data from FIFOs 11 and 16. The data is then buffered and passed to the network (in the case of MAC 7) or the computer workstation (in the case of MAC 8). MACs 7 and 8 also receive data from the network 3 and the computer workstation 2 respectively and route that data to one or both of FIFOs 11 and 13 (in the case of MAC 7) and FIFOs 12 and 15 (in the case of MAC 8). Incoming data that is addressed to a particular source (unicast data) is routed to the appropriate FIFO. Data that is not so addressed (broadcast data) is routed to both of the relevant FIFOs. Control circuitry (not shown) responsive to relevant address portions of the incoming packets activates the MACs and FIFOs appropriately to achieve this. This circuitry is preferably connected to be responsive to the address portions when the packet is in the MAC into which it is received from the network or the computer workstation. Preferably, the address recognition takes place either prior to or during the transfer of data from the MACs to the FIFOs. If the address recognition occurs during the transfer of data, the FIFOs pointers may be manipulated in order to purge written data that is unwanted.

Buffer managers 9 and 10 take data from FIFOs 13 and 15 respectively, buffer the data and transfer it to the VOIP telephone 1. Buffer managers 9 and 10 also take data from the VOIP telephone 1, buffer the data and pass it to FIFOs 14 and 16 respectively. The VOIP telephone 1 is preferably constructed to send and receive voice and control data for the network to and from buffer manager 9 and to send and receive control data to and from the computer workstation via buffer manager 10. The connection between VOIP telephone 1 and network extender module 6 may be a single bus on which data to and from the computer workstation 2 and data to and from the network 3 would be interleaved. The interleaved data is then routed as required by a single buffer manager, that buffer manager performing the functions of buffer managers 9 and 10 by sequentially servicing both sets of FIFOs 13 and 14, and, 15 and 16. Otherwise the circuitry of VOIP telephone is conventional.

Data entering MAC 7 and intended for the network may arrive from either the VOIP telephone 1 via FIFO 14, or from the computer workstation 2 via FIFO 12. MAC 7 therefore requires a method for selecting the next data, especially when both FIFO 12 and FIFO 14 are ready to transmit a packet of data. The simplest form of control gives either the VOIP telephone 1 or the computer workstation 2 priority. Under normal circumstances, the VOIP telephone 1 should have priority since the user will readily notice an increase in the latency of telephonic data. If the VOIP telephone 1 is given priority at all times, as is preferable, when data from FIFO 12 and FIFO 14 are ready to be sent to MAC 7 at the same time, the MAC simply transmits the data packet from FIFO 14 and signals FIFO 12 to prevent it from sending its packet. This data transfer will continue until FIFO 14 is empty; MAC 7 would then take data from FIFO 12. The same method is used by MAC 8 to handle data arriving simultaneously from FIFOs 11 and 16, preferably with the VOIP telephone 1 having priority.

It will be appreciated that other packet priority schemes could be devised and the invention is not limited to the examples disclosed herein.

Such possible schemes include round robin prioritisation, where the MACs alternate between which of two competing sets of data they transmit and bandwidth allocation, where prioritisation is based on the amount of bandwidth consumed by the transmissions. In the present case, however, giving the VOIP telephone 1 priority at all times is preferable for at least three reasons. First, it meets the low latency requirements of the VOIP telephone data. Second, it will not greatly hinder the transfer of data between the network 3 and the computer workstation 2, due to the low bandwidth of the VOIP telephone data. Third, it is a very straightforward scheme to implement.

In addition to receiving data from two FIFOs, MACs 7 and 8 can, as noted above, also transmit data to two FIFOs. Refer to Figure 4; MAC 7 can transmit data to the computer workstation 2 via FIFO 11, to the VOIP telephone 1 via FIFO 13, or to both; MAC 8 can transmit data to the network 3 via FIFO 12, to the VOIP telephone 1 via FIFO 15, or to both.

Preferably, this flow of data is controlled by providing MAC 7 with a data bus that is connected to the input of both FIFO 11 and FIFO 13 and providing control signals on specific conductors for each of FIFOs 11 and 13 indicating whether the data on the data bus is intended for that FIFO, each of FIFOs 11 and 13 ignoring any data at its input when the control signals indicate that the data is for the other FIFO. Each of FIFOs 11 and 13 then only latches data that is intended for it. Alternatively, the FIFOs 11 and 13 may latch all data with the pointers in the FIFO being manipulated to purge unwanted data to prevent it from filling the FIFO buffers. It would be possible to allow data and control signals to be latched into FIFOs and to allow MAC 8 and buffer manager 9 to filter out the unwanted data, this is less advantageous than the other two arrangements as it risks filling the FIFOs with unwanted data. Broadcast packets received by MAC 7 are copied into both of FIFOs 11 and 13.

Any of the methods of controlling the flow of data from MAC 7 to FIFOs 11 and/or 13 discussed above can also be used for controlling the flow of data from MAC 8 to FIFOs 12 and 15. In the preferred embodiment of the invention, a single data bus is provided to pass data from MAC 7 to FIFOs 11 and 13 and from MAC 8 to FIFOs 12 and 15 with individual control signals indicating whether that data is intended for that FIFO.

The majority of the data flow will be between network 3 and computer workstation 2 and vice-versa. Consider data flowing from the computer workstation 2 to the network 3; a packet of data is transmitted to MAC 8 which routes that packet of data to FIFO 12 (and possibly also to FIFO 15). When that packet of data reaches the far end of FIFO 12, the data is passed to MAC 7. MAC 7 buffers that signal and drives the connection to the network. Similarly, a packet of data received at MAC 7 from the network 3 will be routed to FIFO 11 (and possibly also to FIFO 13). This packet of data will be passed to MAC 8 which buffers that signal and drives the connection to the computer workstation 2.

The situation described concerns the transfer of data between the computer workstation 2 and the network 3 when the VOIP telephone 1 is not in use. In those circumstances, the only delays introduced in the connection between the computer workstation 2 and the network 3 are caused by passing the data through MACs 7 and 8 and FIFOs 11 or 12. Thus the provision of VOIP telephone 1 does not significantly detract from the performance of the computer workstation when the VOIP telephone is not in use. Indeed, since the processing of data in the network extender module 6 will typically be much quicker than the transfer of data over the network 3, the delay in the transfer of data between the computer workstation 2 and the network caused by the introduction of the VOIP telephone 1 when that telephone is not in use can be made negligible. This is important because the bulk of the data transmitted will be between the computer workstation 2 and the network 3 and the user will not be aware of any significant degredation in performance as a result of the addition of the extender module and a VOIP telephone 1.

Since it is possible to receive more data for a port than it is able to transmit, flow control is provided in order to prevent packets from being lost due to the build-up of a backlog of packets of data awaiting transmission. In the preferred embodiment, the module includes means for sending a flow control packet to a data source to indicate that it should stop transmitting data to the module. This issue also has implications for the minimum size of the FIFOs 11 and 13. If the data source has started to send a packet of data to the module at the point at which flow control is deemed to be needed, the flow control packet must wait for that packet to be transferred before it can be sent. If that flow control packet arrives at the data source just after that source has started to send a packet, that packet will be sent before the data source is stalled. Thus two packets of data may need to be buffered after the point at which flow control is deemed necessary. Thus FIFOs 11 and 12 need to be relatively large.

With data packets of 1.5 kilobytes (kB), FIFOs 11 and 12 should both be at least 6 kB.

An alternative embodiment of the invention, as shown in Figure 5, also has a MAC 7 for the network 3, a MAC 8 for the computer workstation 2 and two buffer managers 9 and 10 for the VOIP telephone 1. FIFOs 11 to 16 are, however, replaced with a single RAM 17. RAM 17 may be divided into a number of memory blocks, with each block representing one of the FIFOs 11 to 16. In this way, RAM 17 is used to implement the FIFOs of Figure 4 simply. Alternatively, the allocation of memory in the RAM 17 may be dynamic, memory representing FIFOs 11 to 16 being varied as required by the relative throughput of data. Such dynamic allocation of RAM could be implemented using a linked-list structure. For simplicity broadcast packets are copied to the lists for each (i.e. both of the two possible) destination.

The network extender module 6 shown in Figure 4 includes one FIFO for each data route shown in Figure 3. It may be advantageous to provide more FIFOs than this. For example, some classes of data may be more important than others. In such circumstances each of the FIFOs in Figure 4 could be replaced with two FIFOs, one for priority data and one for less important data taking the same route. The FIFOs carrying important data would then be given priority over other FIFOs. This is particularly advantageous for the VOIP telephone 1 as it would enable the VOIP data packets carrying voice information to be given priority over other VOIP data (such as control information bound for the network, for example, the telephone at the other end of a telephone call), since it is particularly important for the voice information not to be delayed. Therefore it is advantageous (at the cost of extra circuitry) to provide two FIFOs for transferring packets from buffer manager 10 to MAC 7, the first of these for voice information and the second for other VOIP data (e.g. control data) the first being given priority over the second.

Since the network extender module of the present invention may take the form of a separate module that can be added to a pre-existing connection between a computer workstation and a network, a convenient place for the network extender module is as part of a VOIP telephone unit. It could also be provided in the computer, for example as part of a network card in the computer. If the module is provided in the computer then the other conventional circuits of the VOIP telephone could also be provided on the computer (e.g. on the network card).

The network extender module may be implemented in hardware. MACs 7 and 8 and buffer managers 9 and 10 may, for example, be provided as ASIC modules, with the FIFO buffers being provided by the ASIC or by a separate memory block as shown in Figure 5.

## Claims

1. A module (6) for connecting first (2) and second (1) data sources to a network (3) using a single network connection, comprising:
first (7) and second (8) interface means respectively for passing data to and from the network (3) and to and from the first data source (2), the module being arranged to transmit data from the first interface means (7) to the second interface means (8) and from the second interface means (8) to the first interface means (7) so as to allow communication between the first data source (2) and the network (3) when they are connected to the module; and
third and fourth interface means both for passing data to and from the second data source (1),
**characterised in that** the module is arranged to transmit data from the third interface means (9) to the first interface means (7) and from the first interface means (7) to the third interface means (9) so as to allow communication between the second data source (1) and the network (3) when they are connected to the module but not to transmit data between the third interface means (9) and the second interface means (8), and is arranged to transmit data from the fourth interface means (10) to the second interface means and from the second interface means (8) to the fourth interface means (10) so as to allow communication between the second data source (1) and first data source (2) when they are connected to the module but not to transmit data between the fourth interface means (10) and the first interface means.

2. A module as claimed in claim 1, wherein the third interface means (9) is arranged to pass data between the second data source (1), when that is connected, and the first interface means (7) only and the fourth interface means is arranged to pass data between the second data source (1), when that is connected, and second interface means (8) only.

3. A module as claimed in claim 1 or claim 2 including means for determining whether data received into the module via the first interface means (7) is addressed for transmission from the module via the third interface means (9) or via the second interface means (8) and for determining whether data received into the module via the second interface means (8) is addressed for transmission from the module via the fourth interface means (10) or via the first interface means (7), the module being arranged to route the data accordingly.

4. A module as claimed in claim 3, wherein said means for determining the intended destination of data received into the module via the first (7) and second (8) interface means is responsive to an address when the data is in the first and second interface means respectively.

5. A module as claimed in any preceding claim, wherein the first (7) and second (8) interface means are media access controllers.

6. A module as claimed in any preceding claim, wherein the third (9) and fourth (10) interface means are arranged to transfer data to and from a Voice Over Internet Protocol (VOIP) telephone.

7. A module as claimed in any preceding claim comprising buffering means (11,12,13,14,15,16) for regulating the flow of data between the interface means (7,8,9,10).

8. A module as claimed in claim 7, wherein the buffering means comprises a plurality of FIFO buffers (11,12,13,14,15,16).

9. A module as claimed in claim 8, wherein the plurality of FIFO buffers comprise: a first FIFO (11) regulating the flow of data from the first interface means (7) to the second interface means (8), a second FIFO (12) regulating the flow of data from the second interface means (8) to the first interface means (7), a third FIFO (13) regulating the flow of data from the first interface means (7) to the third interface means (9), a fourth FIFO (14) regulating the flow of data from the third interface means (9) to the first interface means (7), a fifth FIFO (15) regulating the flow of data from the second interface means (8) to the fourth interface means (10) and a sixth FIFO (16) regulating the flow of data from the fourth interface means (10) to the second interface means (8).

10. A module as claimed in claim 9, comprising at least one further FIFO connected in parallel with one of the said first to sixth FIFOs, the parallel FIFOs carrying data of different importance, the relevant interface means dealing with data from the parallel FIFOs in order of the relative importance of the data carried by the FIFOs.

11. A module as claimed in claim 10, wherein the or a said further FIFO is connected in parallel with the said fourth FIFO (14), the module being arranged to place voice data from the third interface means (9) in one of those two FIFOs and other data from the third interface means (9) in the other and to give priority in the transmission of data from those two FIFOs to the voice data.

12. A module as claimed in any one of claim 7 to 11, wherein the FIFO buffers are implemented in a memory device (17) with each FIFO being represented by a group of memory locations.

13. A module as claimed in claim 12, wherein the memory device (17) is a RAM.

14. A module as claimed in claim 12 or claim 13 comprising means for dynamically allocating memory locations to the FIFO buffers.

15. A module as claimed in any preceding claim including means for prioritising the transmission via the first interface means (7) of data that arrive into the module via the second interface means (8) and the third interface means (9).

16. A module as claimed in claim 15, wherein data arriving via the third interface means (9) takes priority over data arriving via the second interface means (8).

17. A module as claimed in any preceding claim including means for prioritising the transmission via the second interface means (8) of data that arrive via the first interface (7) means and the fourth interface means (10).

18. A module claimed in claim 17, wherein data arriving via the fourth interface means (4) takes priority over data arriving via the first interface means (7).

19. A module as claimed in any preceding claim, wherein the third (9) and fourth (10) interface means are provided by common circuitry arranged to handle data for or from the first interface means alternately with data for or from the second interface means.

20. A module (6) as claimed in any preceding claim in the form of a network interface for installation in a computer.

21. A computer (2) comprising a module (6) as claimed in any preceding claim.

22. A VOIP telephone comprising a module (6) as claimed in any one of claims 1 to 19, mounted on or within the telephone, the VOIP telephone being connected to the module as the second data source (1).

23. A VOIP telephone system comprising a module (6) as claimed in any one of claims 1 to 20, or a computer (2) as claimed in claim 21, and further comprising a VOIP telephone (1) connected to the module (6) as the second data source (1).

24. A VOIP telephone system as claimed in claim 23 comprising a computer workstation (2) as the first data source (2).

25. A system comprising a module (6) as claimed in any one of claims 1 to 20 and comprising a computer workstation (2) as the first data source (2).

26. A computer (2) as claimed in claim 21 wherein the computer (2) is connected to the module (6) as the first data source (2).

27. A VOIP telephone as claimed in claim 22 comprising a computer workstation (2) as the first data source (2).

28. A method of using a module as claimed in any one of claims 1 to 20, A VOIP telephone as claimed in claim 22 or claim 27, or a VOIP telephone system as claimed in claim 23 or claim 24, wherein the majority of data flow is between the first (7) and second (8) interface means.

## Patentansprüche

1. Modul (6) zur Verbindung einer ersten (2) und einer zweiten (1) Datenquelle mit einem Netzwerk unter Verwendung einer einzelnen Netzwerkverbindung, umfassend:
erstes (7) bzw. zweites (8) Schnittstellenmittel zur Weiterleitung von Daten zum und vom Netzwerk (3) bzw. zur und von der ersten Datenquelle (2), wobei das Modul so angeordnet ist, dass es Daten vom ersten Schnittstellenmittel (7) zum zweiten Schnittstellenmittel (8) und vom zweiten Schnittstellenmittel (8) zum ersten Schnittstellenmittel (7) überträgt, um eine Kommunikation zwischen der ersten Datenquelle (2) und dem Netzwerk (3) zu ermöglichen, wenn sie mit dem Modul verbunden sind; und
drittes und viertes Schnittstellenmittel, beide zur Weiterleitung von Daten zur und von der zweiten Datenquelle (1),
**dadurch gekennzeichnet, dass** das Modul so angeordnet ist, dass es Daten vom dritten Schnittstellenmittel (9) zum ersten Schnittstellenmittel (7) und vom ersten Schnittstellenmittel (7) zum dritten Schnittstellenmittel (9) überträgt, um eine Kommunikation zwischen der zweiten Datenquelle (1) und dem Netzwerk (3) zu ermöglichen, wenn sie mit dem Modul verbunden sind, aber um keine Daten zwischen dem dritten Schnittstellenmittel (9) und dem zweiten Schnittstellenmittel (8) zu übertragen, und dass es so angeordnet ist, dass es Daten vom vierten Schnittstellenmittel (10) zum zweiten Schnittstellenmittel (8) und vom zweiten Schnittstellenmittel (8) zum vierten Schnittstellenmittel (10) überträgt, um eine Kommunikation zwischen der zweiten Datenquelle (1) und der ersten Datenquelle (2) zu ermöglichen, wenn sie mit dem Modul verbunden sind, aber um keine Daten zwischen dem vierten Schnittstellenmittel (10) und dem ersten Schnittstellenmittel zu übertragen.

2. Modul, wie in Anspruch 1 beansprucht, bei dem das dritte Schnittstellenmittel (9) so angeordnet ist, dass es Daten nur zwischen der zweiten Datenquelle (1), wenn diese verbunden ist, und dem ersten Schnittstellenmittel (7) überträgt, und bei dem das vierte Schnittstellenmittel so angeordnet ist, dass es Daten nur zwischen der zweiten Datenquelle (1), wenn diese verbunden ist, und dem zweiten Schnittstellenmittel (8) überträgt.

3. Modul, wie in Anspruch 1 oder Anspruch 2 beansprucht, einschließlich Mittel zur Bestimmung, ob Daten, die über das erste Schnittstellenmittel (7) im Modul empfangen wurden, zur Übertragung vom Modul über das dritte Schnittstellenmittel (9) oder über das zweite Schnittstellenmittel (8) adressiert ist, und zur Bestimmung, ob Daten, die über das zweite Schnittstellenmittel (8) im Modul empfangen wurden, zur Übertragung vom Modul über das vierte Schnittstellenmittel (10) oder über das erste Schnittstellenmittel (7) adressiert ist, wobei das Modul so angeordnet ist, dass es die Daten entsprechend leitet.

4. Modul, wie in Anspruch 3 beansprucht, bei dem das Mittel zur Bestimmung des beabsichtigten Ziels von Daten, die über das erste (7) und zweite Schnittstellenmittel (8) im Modul empfangen wurden, auf eine Adresse reagiert, wenn sich die Daten im ersten bzw. zweiten Schnittstellenmittel befinden.

5. Modul, wie in einem der vorhergehenden Ansprüche beansprucht, bei dem das erste (7) und zweite Schnittstellenmittel (8) Media Access Controller sind.

6. Modul, wie in einem der vorhergehenden Ansprüche beansprucht, bei dem das dritte (9) und vierte (10) Schnittstellenmittel so angeordnet sind, dass sie Daten zu und von einem Voice Over Internet Protocol (VoIP) Telefon übertragen.

7. Modul, wie in einem der vorhergehenden Ansprüche beansprucht, umfassend Puffermittel (11, 12, 13, 14, 15, 16) zur Steuerung des Flusses von Daten zwischen den Schnittstellenmitteln (7, 8, 9, 10).

8. Modul, wie in Anspruch 7 beansprucht, bei dem das Puffermittel eine Mehrzahl von FIFO-Puffern (11, 12, 13, 14, 15, 16) umfasst.

9. Modul, wie in Anspruch 8 beansprucht, bei dem die Mehrzahl von FIFO-Puffern Folgendes umfassen: einen ersten FIFO (11), der den Fluss von Daten vom ersten Schnittstellenmittel (7) zum zweiten Schnittstellenmittel (8) steuert, einen zweiten FIFO (12), der den Fluss von Daten vom zweiten Schnittstellenmittel (8) zum ersten Schnittstellenmittel (7) steuert, einen dritten FIFO (13), der den Fluss von Daten vom ersten Schnittstellenmittel (7) zum dritten Schnittstellenmittel (9) steuert, einen vierten FIFO (14), der den Fluss von Daten vom dritten Schnittstellenmittel (9) zum ersten Schnittstellenmittel (7) steuert, einen fünften FIFO (15), der den Fluss von Daten vom zweiten Schnittstellenmittel (8) zum vierten Schnittstellenmittel (10) steuert, und einen sechsten FIFO (16), der den Fluss von Daten vom vierten Schnittstellernmittel (10) zum zweiten Schnittstellenmittel (8) steuert.

10. Modul, wie in Anspruch 9 beansprucht, umfassend zumindest einen weiteren FIFO, der mit einem der ersten bis sechsten FIFOs parallel geschaltet ist, wobei die parallelen FIFOs Daten von unterschiedlicher Wichtigkeit übertragen, wobei das entsprechende Schnittstellenmittel Daten von den parallelen FIFOs in der Reihenfolge der relativen Wichtigkeit der von den FIFOs übertragenen Daten bearbeitet.

11. Modul, wie in Anspruch 10 beansprucht, bei dem das oder ein weiterer FIFO parallel mit dem vierten FIFO (14) geschaltet ist, wobei das Modul so angeordnet ist, dass es Sprachdaten vom dritten Schnittstellenmittel (9) in einem dieser beiden FIFOs platziert, und andere Daten vom dritten Schnittstellenmittel (9) im anderen platziert, und dass es die Sprachdaten bei der Übertragung von Daten aus diesen beiden FIFOs vorrangig behandelt.

12. Modul, wie in einem der Ansprüche 7 bis 11 beansprucht, bei dem die FIFO-Puffer in einem Speicherbaustein (17) implementiert sind, wobei jeder FIFO durch eine Gruppe von Speicherstellen vertreten ist.

13. Modul, wie in Anspruch 12 beansprucht, bei dem der Speicherbaustein (17) ein RAM ist.

14. Modul, wie in Anspruch 12 oder 13 beansprucht, das Mittel zur dynamischen Zuordnung von Speicherstellen zu den FIFO-Puffern umfasst.

15. Modul, wie in einem der vorhergehenden Ansprüche beansprucht, das Mittel zur Priorisierung der Übertragung von Daten, die über das zweite Schnittstellenmittel (8) und das dritte Schnittstellenmittel (9) im Modul eintreffen, über das erste Schnittstellenmittel (7) enthält.

16. Modul, wie in Anspruch 15 beansprucht, bei dem Daten, die über das dritte Schnittstellenmittel (9) eintreffen, Vorrang über Daten haben, die über das zweite Schnittstellenmittel (8) eintreffen.

17. Modul, wie in einem der vorhergehenden Ansprüche beansprucht, das Mittel zur Priorisierung der Übertragung von Daten, die über das erste Schnittstellenmittel (7) und das vierte Schnittstellenmittel (10) eintreffen, über das zweite Schnittstellenmittel (8) enthält.

18. Modul, wie in Anspruch 17 beansprucht, bei dem Daten, die über das vierte Schnittstellenmittel (4) eintreffen, Vorrang über Daten haben, die über das erste Schnittstellenmittel (7) eintreffen.

19. Modul, wie in einem der vorhergehenden Ansprüche beansprucht, bei dem das dritte (9) und vierte (10) Schnittstellenmittel durch gewöhnliche Schaltungen bereitgestellt werden, die so angeordnet sind, dass sie Daten für oder vom ersten Schnittstellenmittel abwechselnd mit Daten für oder vom zweiten Schnittstellenmittel bearbeiten.

20. Modul (6), wie in einem der vorhergehenden Ansprüche beansprucht, in Form einer Netzwerkschnittstelle zur Installation in einem Computer.

21. Computer (2), umfassend ein Modul (6), wie in einem der vorhergehenden Ansprüche beansprucht.

22. VoIP-Telefon, umfassend ein Modul (6), wie in einem der Ansprüche 1 bis 19 beansprucht, das auf oder im Telefon angebracht ist, wobei das VoIP-Telefon am Modul als zweite Datenquelle (1) angeschlossen ist.

23. VoIP-Telefonsystem, umfassend ein Modul (6), wie in einem der Ansprüche 1 bis 20 beansprucht, oder einen Computer (2), wie in Anspruch 21 beansprucht, und ferner umfassend ein VoIP-Telefon (1), das am Modul (6) als zweite Datenquelle (1) angeschlossen ist.

24. VoIP-Telefonsystem, wie in Anspruch 23 beansprucht, umfassend eine Computer-Workstation (2) als erste Datenquelle (2).

25. System, das ein Modul (6), wie in einem der Ansprüche 1 bis 20 beansprucht, und eine Computer-Workstation (2) als erste Datenquelle (2) umfasst.

26. Computer (2), wie in Anspruch 21 beansprucht, bei dem der Computer (2) am Modul (6) als erste Datenquelle (2) angeschlossen ist.

27. VoIP-Telefon, wie in Anspruch 22 beansprucht, umfassend eine Computer-Workstation (2) als erste Datenquelle (2).

28. Verfahren zur Verwendung eines Moduls, wie in einem der Ansprüche 1 bis 20 beansprucht, eines VoIP-Telefons, wie in Anspruch 22 oder Anspruch 27 beansprucht, oder ein VoIP-Telefonsystem, wie in Anspruch 23 oder Anspruch 24 beansprucht, bei dem der Großteil des Datenflusses zwischen dem ersten (7) und zweiten (8) Schnittstellenmittel stattfindet.

## Revendications

1. Module (6) destiné à connecter des première (2) et seconde (1) sources de données à un réseau (3) utilisant une simple connexion réseau, comprenant :
des premier (7) et deuxième (8) moyens d'interface destinés respectivement à faire passer des données vers et en provenance du réseau (3) et vers et en provenance de la première source de données (2), le module étant agencé pour transmettre des données en provenance du premier moyen d'interface (7) vers le deuxième moyen d'interface (8) et en provenance du deuxième moyen d'interface (8) vers le premier moyen d'interface (7) de façon à permettre la communication entre la première source de données (2) et le réseau (3) lorsqu'ils sont connectés au module ; et
des troisième et quatrième moyens d'interface tous les deux destinés à faire passer des données vers et en provenance de la seconde source de données (1),
**caractérisé en ce que** le module est agencé pour transmettre des données en provenance du troisième moyen d'interface (9) vers le premier moyen d'interface (7) et en provenance du premier moyen d'interface (7) vers le troisième moyen d'interface (9) de façon à permettre la communication entre la seconde source de données (1) et le réseau (3) lorsqu'ils sont connectés au module mais à ne pas transmettre de données entre le troisième moyen d'interface (9) et le deuxième moyen d'interface (8), et est agencé pour transmettre des données en provenance du quatrième moyen d'interface (10) vers le deuxième moyen d'interface (8) et en provenance du deuxième moyen d'interface (8) vers le quatrième moyen d'interface (10) de façon à permettre la communication entre la seconde source de données (1) et la première source de données (2) lorsqu'elles sont connectées au module mais à ne pas transmettre de données entre le quatrième moyen d'interface (10) et le premier moyen d'interface.

2. Module selon la revendication 1, dans lequel le troisième moyen d'interface (9) est agencé pour faire passer des données entre la seconde source de données (1), lorsqu'elle est connectée, et le premier moyen d'interface (7) uniquement et le quatrième moyen d'interface est agencé pour faire passer des données entre la seconde source de données (1), lorsqu'elle est connectée, et le deuxième moyen d'interface (8) uniquement.

3. Module selon la revendication 1 ou la revendication 2, comprenant un moyen destiné à déterminer si les données reçues dans le module via le premier moyen d'interface (7) sont adressées pour transmission depuis le module via le troisième moyen d'interface (9) ou via le deuxième moyen d'interface (8) et destiné à déterminer si les données reçues dans le module via le deuxième moyen d'interface (8) sont adressées pour transmission depuis le module via le quatrième moyen d'interface (10) ou via le premier moyen d'interface (7), le module étant agencé pour acheminer les données en conséquence.

4. Module selon la revendication 3, dans lequel ledit moyen destiné à déterminer la destination souhaitée des données reçues dans le module via les premier (7) et deuxième (8) moyens d'interface répond à une adresse lorsque les données se trouvent respectivement dans les premier et deuxième moyens d'interface.

5. Module selon l'une quelconque des revendications précédentes, dans lequel les premier (7) et deuxième (8) moyens d'interface sont des contrôleurs d'accès au support.

6. Module selon l'une quelconque des revendications précédentes, dans lequel les troisième (9) et quatrième (10) moyens d'interface sont agencés pour transférer des données vers et en provenance d'un téléphone/voix sur IP (VOIP).

7. Module selon l'une quelconque des revendications précédentes, comprenant des moyens de mémoire-tampon (11, 12, 13, 14, 15, 16) destinés à réguler la circulation des données entre les moyens d'interface (7, 8, 9, 10).

8. Module selon la revendication 7, dans lequel les moyens de mémoire-tampon comprennent une pluralité de mémoires-tampons FIFO (11, 12, 13, 14, 15, 16).

9. Module selon la revendication 8, dans lequel la pluralité de mémoires-tampons FIFO comprennent : une première mémoire FIFO (11) régulant la circulation des données du premier moyen d'interface (7) vers le deuxième moyen d'interface (8), une deuxième mémoire FIFO (12) régulant la circulation des données du deuxième moyen d'interface (8) vers le premier moyen d'interface (7), une troisième mémoire FIFO (13) régulant la circulation des données du premier moyen d'interface (7) vers le troisième moyen d'interface (9), une quatrième mémoire FIFO (14) régulant la circulation des données du troisième moyen d'interface (9) vers le premier moyen d'interface (7), une cinquième mémoire FIFO (15) régulant la circulation des données du deuxième moyen d'interface (8) vers le quatrième moyen d'interface (10), et une sixième mémoire FIFO (16) régulant la circulation des données du quatrième moyen d'interface (10) vers le deuxième moyen d'interface (8).

10. Module selon la revendication 9, comprenant au moins une mémoire FIFO supplémentaire connectée en parallèle à l'une desdites première à sixième mémoires FIFO, les mémoires FIFO parallèles portant des données d'importance différente, le moyen d'interface approprié traitant les données à partir des mémoires FIFO parallèles dans l'ordre de l'importance appropriée des données portées par les mémoires FIFO.

11. Module selon la revendication 10, dans lequel la ou une dite mémoire FIFO supplémentaire est connectée en parallèle à ladite quatrième mémoire FIFO (14), le module étant agencé pour placer des données vocales provenant du troisième moyen d'interface (9) dans l'une de ces deux mémoires FIFO et d'autres données provenant du troisième moyen d'interface (9) dans l'autre, et pour donner la priorité dans la transmission de données à partir de ces deux mémoires FIFO, aux données vocales.

12. Module selon l'une quelconque des revendications 7 à 11, dans lequel les mémoires-tampons FIFO sont implantées dans un dispositif de mémoire (17), chaque mémoire FIFO étant représentée par un groupe d'emplacements de mémoire.

13. Module selon la revendication 12, dans lequel le dispositif de mémoire (17) est une RAM.

14. Module selon la revendication 12 ou la revendication 13, comprenant un moyen destiné à attribuer de manière dynamique des emplacements de mémoire aux mémoires-tampons FIFO.

15. Module selon l'une quelconque des revendications précédentes, comprenant un moyen destiné à donner la priorité à la transmission, via le premier moyen d'interface (7), des données qui arrivent dans le module via le deuxième moyen d'interface (8) et le troisième moyen d'interface (9).

16. Module selon la revendication 15, dans lequel les données arrivant via le troisième moyen d'interface (9) ont la priorité sur les données arrivant via le deuxième moyen d'interface (8).

17. Module selon l'une quelconque des revendications précédentes, comprenant un moyen destiné à donner la priorité à la transmission, via le deuxième moyen d'interface (8), des données qui arrivent via le premier moyen d'interface (7) et le quatrième moyen d'interface (10).

18. Module selon la revendication 17, dans lequel les données arrivant via le quatrième moyen d'interface (10) ont la priorité sur les données arrivant via le premier moyen d'interface (7).

19. Module selon l'une quelconque des revendications précédentes, dans lequel les troisième (9) et quatrième (10) moyens d'interface sont fournis par un ensemble de circuits communs agencés pour traiter des données pour ou provenant du premier moyen d'interface en alternance avec des données pour ou provenant du deuxième moyen d'interface.

20. Module (6) selon l'une quelconque des revendications précédentes se présentant sous la forme d'une interface réseau pour une installation dans un ordinateur.

21. Ordinateur (2) comprenant un module (6) selon l'une quelconque des revendications précédentes.

22. Téléphone VOIP comprenant un module (6) selon l'une quelconque des revendications 1 à 19, monté sur ou dans le téléphone, le téléphone VOIP étant connecté au module en tant que seconde source de données (1).

23. Système téléphonique VOIP comprenant un module (6) selon l'une quelconque des revendications 1 à 20, ou un ordinateur (2) selon la revendication 21, et comprenant en outre un téléphone VOIP (1) connecté au module (6) en tant que seconde source de données (1).

24. Système téléphonique VOIP selon la revendication 23 comprenant un poste de travail informatique (2) en tant que première source de données (2).

25. Système comprenant un module (6) selon l'une quelconque des revendications 1 à 20 et comprenant un poste de travail informatique (2) en tant que première source de données (2).

26. Ordinateur (2) selon la revendication 21, dans lequel l'ordinateur (2) est connecté au module (6) en tant que première source de données (2).

27. Téléphone VOIP selon la revendication 22 comprenant un poste de travail informatique (2) en tant que première source de données (2).

28. Procédé d'utilisation d'un module selon l'une quelconque des revendications 1 à 20, d'un téléphone VOIP selon la revendication 22 ou la revendication 27, ou d'un système téléphonique VOIP selon la revendication 23 ou la revendication 24, dans lequel la majeure partie de la circulation de données se fait entre les premier (7) et deuxième (8) moyens d'interface.
